# EUROPEAN PATENT SPECIFICATION

(11) **EP 0 421 666 B1**
(45) Date of publication and mention of the grant of the patent: **24.01.1996**
(21) Application number: 90310562.5
(22) Date of filing: 27.09.1990
(51) Int. Cl.: C08F 8/00

(54) **Thermosetting resin composition**
Thermohärtende Harzzusammensetzung
Composition de résine thermodurcissable

(30) Priority: 29.09.1989 JP 254803/89; 10.07.1990 JP 180604/90
(43) Date of publication of application: 10.04.1991
(73) Proprietor: DAINIPPON INK AND CHEMICALS, INC., Itabashi-ku, Tokyo 174 (JP)
(72) Inventor: Iwamura, Goro, Sakai-shi, Osaka (JP); Kinoshita, Hiroshi, Suita-shi, Osaka (JP); Kometani, Asako, Sakai-shi, Osaka (JP)
(74) Representative: Cresswell, Thomas Anthony

(56) References cited:
- EP-A- 0 001 088
- EP-A- 0 272 664
- EP-A- 0 274 721
- EP-A- 0 358 358
- EP-A- 0 394 786
- CHEMICAL ABSTRACTS, vol. 112, no. 6, 5 February 1990, Columbus, Ohio, US; abstract no. 38280K, 'Storage-stable low-temperature-curable coating compositions' page 138 ;
- CHEMICAL ABSTRACTS, vol. 112, no. 4, 22 January 1990, Columbus, Ohio, US; abstract no. 22453H, 'Low-temperature-curable coating compositions' page 89 ;
- WORLD PATENTS INDEX LATEST Week 8707, Derwent Publications Ltd., London, GB; AN 87-048994

## Description

This invention relates to a thermosetting resin composition. In more detail, this invention relates to various thermosetting resin compositions of a curing system comprising as basal components a vinyl polymer having at least one, preferably at least two, 2-oxo-1,3-dioxolan-4-yl groups (hereinafter also referred to as cyclocarbonate groups) and a specific curing catalyst which acts as a ring opening catalyst for the cyclocarbonate group.

Recently, increasing importance has been attached to coat appearance in the automobile industry. However, problems of maintenance of coat appearance caused by deterioration by exposure, above all, the lowering of appearance by acid rain, to say nothing of the problem of the finished appearance after coating and baking have occurred. A coating now in use comprising a combination of an aminoplast curing agent and an acrylic polyol no longer has the required performance.

Various coatings have been investigated, such as those of a curing system comprising a combination of a polyol type resin and an isocyanate prepolymer; a curing system comprising a combination of a silanol group-containing resin and an epoxy group containing resin; a trialkoxysilyl group-based humidity curing system; and a curing system comprising a combination of a hydroxyl group containing resin and an acid anhydride group containing resin.

However, among those coating systems, the polyol type resin/isocyanate prepolymer system has a short pot life and thus has a large drawback in terms of workability.

In the case of the curing system of a silanol group containing resin and an epoxy group containing resin and the humidity curing system of a trialkoxysilyl group, curability differences based on coating and baking conditions occur, and in addition the appearance is not satisfactory.

In addition to a curing system which overcomes the problems of a long-term storage stability and coat appearance, there has come to be strongly desired in the automobile industry a curing system which is capable of providing a coat which withstands acid rain.

EP-A-272,664 discloses a curable coating composition comprising a compound containing 2-oxo-1,3-dioxolan-4-yl group, polyisocyanate and/or aminoplast resins and, optionally, curing compounds. The curing compounds such as diethyl ethanol amine cure an isocyanate compound or a melamine resin.

JP-A-1/146,968 discloses copolymers derived from unsaturated groups such as vinyl, 2-oxo-1,3-dioxolan-4-yl groups and COOH-containing monomers.

The present invention provides a thermosetting resin composition which comprises 100 parts by weight of a vinyl polymer (A) having at least one 2-oxo-1,3-dioxolan-4-yl group and 0.01 to 5 parts by weight of a quaternary ammonium salt or 2-hydroxypyridine as a curing catalyst (B).

The resin composition of the present invention is useful as a one-can coating having excellent storage stability, acid resistance, weather resistance and coat appearance such as smoothness.

The 2-oxo-1,3-dioxolan-4-yl group preferably is of formula: 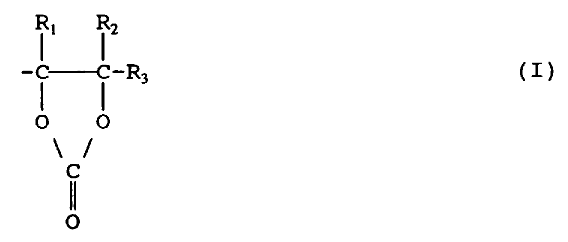 wherein R₁, R₂ and R₃, which may be identical or different, each represent a hydrogen atom or an alkyl group having 1 to 4 carbon atoms. The vinyl polymer (A) may also have a carboxyl group. The vinyl polymer (A) may also have a hydroxyl group, or a hydroxyl group and a carboxyl group, and a curing agent (D) having reactivity with a hydroxyl group may be compounded therewith.

The composition may also comprise a compound (C) having at least two carboxyl groups and/or an acid anhydride group. Compound (C) may, for example, have at least two carboxyl groups and a hydroxyl group. Compound (C) may, for example, be at least one of a vinyl polymer, a polyester resin or a low molecular weight compound.

The composition of the present invention has excellent storage stability and thus gives a one-can coating whose workability is good, and moreover gives a coat having excellent weather resistance, coat appearance and acid resistance.

Thus, for example, the composition may comprise the vinyl polymer (A) having at least one 2-oxo-1,3-dioxolan-4-yl group, the catalyst (B), and a further compound (C) having at least two carboxyl groups and/or an acid anhydride group. The composition may also, for example, comprise the vinyl polymer (A), the catalyst (B), a compound (C) having at least two carboxyl groups and a curing agent (D) having reactivity with a hydroxyl group.

The vinyl polymer (A) preferably has a hydroxyl group. It also preferably has at least two 2-oxo-1,3-dioxolan-4-yl groups and a hydroxyl group. The vinyl polymer (A) can, for example, be obtained by copolymerization of a compound (a-1) having one α,β-ethylenic unsaturated double bond (hereinafter also referred to as an unsaturated bond) and at least one 2-oxo-1,3-dioxolan-4-yl group with a compound having one unsaturated bond and at least one hydroxyl group, and/or another polymerizable unsaturated monomer; by addition reacting a polyisocyanate compound such as hexamethylenediisocyanate with a known and conventional hydroxyl group containing vinyl polymer, and then addition reacting a carbonate monoalcohol such as glyceryl carbonate therewith; by addition reacting a carbonate monoalcohol with a known and conventional isocyanate group containing polymer such as an isocyanate-ethyl (meth)acrylate copolymer; or by addition reacting a carbonate monoalcohol with a known and conventional acid chloride group containing polymer. The vinyl polymer (A) obtained by copolymerization of the compound (a-1) with the hydroxyl group containing polymerizable unsaturated monomer is particularly recommended due to its particular convenience.

Representative examples of a compound having one polymerizable unsaturated double bond and at least one 2-oxo-1,3-dioxolan-4-yl group which can be used to obtain a vinyl copolymer containing at least two 2-oxo-1,3-dioxolan-4-yl groups are acrylate series compounds of formula: 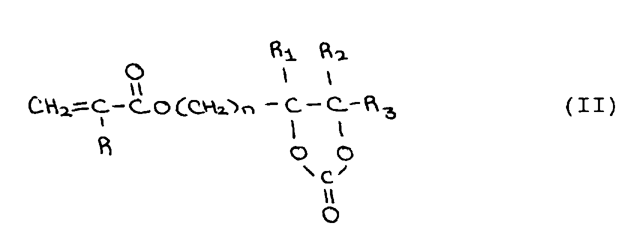 wherein R represents a hydrogen atom or a methyl group, R₁, R₂ and R₃ are as defined above, and n is an integer of 1 to 6. Examples of such compounds are 2,3-carbonatepropyl (meth)acrylate, 2-methyl-2,3-carbonate propyl (meth)acrylate, 3,4-carbonatebutyl (meth)acrylate, 3-methyl-3,4-carbonatebutyl (meth)acrylate, 4-methyl-3,4-carbonatebutyl (meth)acrylate, 4,5-carbonatepentyl (meth)acrylate, 6,7-carbonatehexyl (meth)acrylate, 5-ethyl-5,6-carbonatehexyl (meth)acrylate and 7,8-carbonateoctyl (meth)acrylate. In addition to these compounds, there can be exemplified compounds of, for example, the vinyl series such as 2,3-carbonatepropyl vinyl ether, methyl-2,3-carbonate-propyl maleate and methyl-2,3-carbonatepropyl crotonate.

These compound are used in an amount of 1 to 70 parts by weight, preferably 5 to 35 parts by weight.

In case of less than 1 part by weight, no effect of the compound can be expected. When the compound is used in an excessively large amount beyond 70 parts by weight, a hard and brittle coat is inevitably obtained due to the remaining 2-oxo-1,3-dioxolan-4-yl group.

The another vinyl monomer copolymerizable with the unsaturated monomer containing a 2-oxo-1,3-dioxolan-4-yl group is not particularly limited, but copolymerization with an unsaturated monomer further containing as functional group(s) a hydroxyl group and/or a carboxyl group enhances the effects of the invention.

Representative examples of hydroxyl group containing unsaturated monomers are β-hydroxyalkyl (meth)acrylates such as 2-hydroxyethyl (meth)acrylate and 4-hydroxybutyl (meth)acrylate; 2-hydroxyalkyl vinyl ethers such as 4-hydroxybutyl vinyl ether; allyl compounds such as allyl alcohol and hydroxyethyl allyl ether; and hydroxyl group containing unsaturated monomers wherein ε-caprolactone is linked to the above monomers.

The introduction of a hydroxyl group causes a reaction with the carbonate and increases the crosslinking density, thereby enhancing the solvent resistance and weather resistance.

A carboxyl group containing unsaturated monomer (a-2) can also be used.

The use of such a carboxyl group containing monomer remarkably enhances the compatibility with the carboxyl group or acid anhydride group containing compound, and is thus particularly effective.

Representative examples of the carboxyl group containing unsaturated monomer are α,β-ethylenic unsaturated mono- or dicarboxylic acids such as (meth)acrylic acid, maleic acid, fumaric acid and itaconic acid; esters of an α,β-ethylenic unsaturated dicarboxylic acid and monohydric alcohol having 1 to 4 carbon atoms such as diethyl maleate, dibutyl maleate, dibutyl fumarate and diethyl itaconate; and carboxyl group containing unsaturated monomers obtained by linking an acid anhydride such as phthalic anhydride to a hydroxyl group containing vinyl monomer such as 2-hydroxyethyl (meth)acrylate.

Representative examples of the another copolymerizable vinyl monomer (a-4) include (meth)acrylates which do not contain a reactive polar group such as alkyl (meth)acrylates having an alkyl group having 1 to 22 carbon atoms, 2-ethoxyethyl (meth)acrylate and cyclohexyl (meth)acrylate; reactive polar group containing (meth)acrylates such as glycidyl (meth)acrylate; aromatic vinyl monomers such as styrene, tert-butyl styrene, α-methylstyrene and vinyltoluene; (meth)acrylamides such as (meth)acrylamide and N-alkoxymethylated (meth)acrylamide; (meth)acrylonitrile, vinyl acetate, phosphoric acid group containing (meth)acrylates, and fluorine containing vinyl monomers such as tetrafluoroethylene and hexafluoropropylene.

Examples of the vinyl polymer (A) having at least one, preferably at least two, 2-oxo-1,3-dioxolan-4-yl groups and a carboxyl group include those obtained by copolymerization of a compound (a-1) having one unsaturated bond and at least one 2-oxo-1,3-dioxolan-4-yl group such as one exemplified above, a carboxyl group containing unsaturated monomer (a-2) such as one exemplified above, a tertiary amino group containing vinyl monomer (a-3), and another copolymerizable vinyl monomer (a-4) such as one exemplified above.

Representative examples of the above tertiary amino group containing vinyl monomer (a-3) include N,N-dialkylaminoalkyl (meth)acrylates such as N,N-dimethylaminoethyl (meth)acrylate, N,N-diethylaminoethyl (meth)acrylate and N,N-diethylaminopropyl (meth)acrylate.

The compound (a-1) having an α,β-ethylenic unsaturated double bond and at least one 2-oxo-1,3-dioxolan-4-yl group is used in an amount of 1-70 parts by weight.

The tertiary amino group containing vinyl monomer (a-3) is used in an amount of up to 5 parts by weight, wherein the total amount of the monomers is 100 parts by weight.

When it is used in an amount above 5 parts by weight, the resulting vinyl copolymerization resin is inevitably coloured and the weather resistance is spoiled.

The above carboxyl group containing vinyl monomer (a-2) is used in an amount of 1 to 70 parts by weight, preferably less than 50 parts by weight, and the another copolymerizable vinyl monomer (a-4) is used in an amount of up to 98 parts by weight.

When the monomer is used in a too large amount beyond 50 parts by weight, water resistance and weather resistance, for example, are worsened due to the increase of the carboxyl groups remaining. Thus both cases are not suitable.

Any of the above-mentioned polymerizable unsaturated monomers may be used alone or in combination of two or more.

In preparation of the vinyl copolymers using monomers as mentioned above, any known and conventional polymerization methods such as a solution polymerization method and a non-water dispersion polymerization method can be applied, but it is most convenient to use a solution radical polymerization method.

Representative examples of solvents used therein include hydrocarbon solvents such as toluene, xylene, cyclohexane, n-hexane and octane; ester solvents such as methyl acetate, n-butyl acetate and amyl acetate; and ketone solvents such as acetone, methyl ethyl ketone, methyl isobutyl ketone, methyl amyl ketone and cyclohexanone. These may be used alone or in combination of two or more.

Representative examples of the radical polymerization initiator include known and conventional ones of the azo series represented by azobisisobutyronitrile and peroxide series represented by benzoyl peroxide. Furthermore, there can be used, if necessary, as a molecular weight adjusting agent, a known and conventional chain transfer agent such as lauryl mercaptan, octyl mercaptan, 2-mercaptoethanol, octyl thioglycolate, 3-mercaptopropionic acid or α-methyl-styrene dimer.

The number average molecular weight of the vinyl copolymerization resin thus obtained is 800 to 50,000, preferably 1,500 to 50,000. In case of a molecular weight of less than 800, it becomes difficult to obtain a resin having the required performance and in case of a molecular weight of more than 50,000, there is a bad influence on workability. Thus both the cases are not suitable.

Representative examples of the above carboxyl group and/or acid anhydride group containing compound (c-1) include at least one of vinyl copolymers, polyester resins and low molecular compounds, each having the above specific functional group(s).

The vinyl copolymer may also be one obtained by copolymerizing a carboxyl group containing unsaturated monomer and/or an acid anhydride group containing unsaturated monomer with another copolymerizable unsaturated monomer as mentioned above.

There can be used as such carboxyl group containing unsaturated monomers the various ones mentioned above.

There can for example be mentioned as the acid anhydride group containing unsaturated monomer one having an acid anhydride group and an unsaturated group, together represented by maleic anhydride or itaconic anhydride.

There can be used as another unsaturated monomer copolymerizable with the carboxyl group containing unsaturated monomer and/or the acid anhydride group containing unsaturated monomer any of the unsaturated monomers mentioned above copolymerizable with the 2-oxo-1,3-dioxolan-4-yl group containing unsaturated monomer.

Examples of the carboxyl group containing polyester resin are one obtained by reacting an excess of an acid component with a polyhydric alcohol, and one obtained by reacting an acid anhydride group with a hydroxyl group containing polyester resin.

The polyester resin referred to herein is not a particular one, but one obtained, for example, by condensing by a known and conventional method a polyvalent carboxylic acid such as phthalic acid, isophthalic acid, adipic acid, maleic acid or a dimer acid with a polyol such as ethylene glycol, propylene glycol, neopentyl glycol or trimethylolpropane.

More specifically, there can be mentioned a carboxyl group-terminated unsaturated polyester resin, for example one obtained by linking an acid anhydride group containing compound such as trimellitic acid to a hydroxyl group-terminated polyester obtained by a reaction under conditions such that the polyol component is in excess, or one obtained by reaction under conditions such that the polyvalent carboxylic acid is in excess from the start.

Examples of the carboxyl group containing low molecular compound are adipic acid, phthalic acid, isophthalic acid and dimer acids.

Examples of the acid anhydride group containing low molecular compound include trimellitic acid, tetrahydrophthalic anhydride, hexahydrophthalic anhydride, HET™ anhydride, Hi-mic^{TM} anhydride, maleic anhydride, itaconic anhydride, pyromellitic anhydride, glycerol tris(trimellitate) and ethylene glycol di(trimellitate).

Representative examples of the compound (c-2) having carboxyl groups are the various compounds mentioned above having carboxyl groups alone as functional groups (reactive polar groups).

These compounds (c-1) and (c-2) acts as crosslinking agents mainly of the vinyl polymers (A) having a 2-oxo-1,3-dioxolan-4-yl group and the vinyl polymers (A) having a 2-oxo-1,3-dioxolan-4-yl group and a carboxyl group.

As the curing catalyst (B), a 2-oxo-1,3-dioxolan-4-yl ring opening catalyst which is a quaternary ammonium salt or 2-hydroxypyridine is used.

The 2-oxo-1,3-dioxolan-4-yl group ring opening catalyst is important mainly for the decarboxylation reaction based on the 2-oxo-1,3-dioxolan-4-yl group. The catalyst is 2-hydroxypyridine or a quaternary ammonium salt such as tetramethylammonium bromide, trimethylbenzylammonium hydroxide, trimethylbenzylammonium methoxide, phenyltrimethylammonium chloride, phenyltrimethylammonium bromide, phenyltrimethylammonium hydroxide, phenyltrimethylammonium iodide, phenyltrimethylammonium tribromide, phosphocholine chloride sodium salt, stearylammonium bromide, tetra-n-amylammonium iodide, tetra-n-butylammonium bromide, tetra-n-butylammonium hydroxide, tetra-n-butylammonium phosphate, tetra-n-decylammonium trichloride, tetraethylammonium hydroxide, tetraethylammonium tetrafluoroborate, acetylcholine bromide, alkyldimethylbenzylammonium chloride, benzylcholine bromide, benzyl-n-butylammonium bromide, betaine, butyryl chloride, bis(tetra-n-butylammonium) dichromate or trimethylvinylammonium bromide.

The 2-oxo-1,3-dioxolan-4-yl ring opening catalyst is used in an amount of 0.01 to 5 parts by weight per 100 parts by solid weight of the vinyl copolymerization resin.

The amount used has a large influence on the baking temperature of the vinyl copolymerization resin with the carboxyl group containing and/or acid anhydride group containing compound. In case of less than 0.01 part by weight, the crosslinking reaction does not, inevitably, sufficiently take place. When the catalyst is used in a too large amount beyond 5 parts by weight, the storage stability of the thermosetting resin composition is extremely lowered and moreover the water resistance of the coat is reduced remarkably.

The quaternary ammonium salt also acts as an epoxy group ring opening catalyst. This promotes the reaction of the epoxy group formed by the decarboxylation reaction of the 2-oxo-1,3-dioxolan-4-yl group with the carboxyl group containing and/or acid anhydride group containing compound.

A combined use of triphenylphosphine with the quaternary ammonium salt catalyst is also effective.

Examples of the curing agents (D) having reactivity with a hydroxyl group are known and conventional ones such as amino resins, acid anhydride group containing compounds, isocyanate prepolymers and block polyisocyanates.

Representative examples of the amino resins include melamine resins, benzoguanamine resins and urea resins. Specific examples are those obtained by addition condensing formaldehyde and an aliphatic alcohol with melamine, benzoguanamine or urea as a main component.

Representative examples of the aliphatic alcohol used for etherification are methanol, ethanol, isopropanol and n-butanol. They are used in combination.

Representative examples of the acid anhydride group containing compound are those obtained by copolymerizing an acid anhydride group containing polymerizable unsaturated monomer such as maleic anhydride or itaconic anhydride with a copolymerizable unsaturated monomer as mentioned above, i.e. another copolymerizable vinyl monomer (a-4).

Representative examples of the low molecular compound are trimellitic acid, tetrahydrophthalic anhydride, hexahydrophthalic anhydride, HET^{TM} anhydride, Hi-mic^{TM} anhydride, maleic anhydride, itaconic anhydride, pyromellitic anhydride, glycerol tris(trimellitate) and ethylene glycol di(trimellitate).

Representative examples of the isocyanate prepolymer include aromatic diisocyanates such as tolylene diisocyanate and diphenylmethane diisocyanate; aliphatic diisocyanates such as hexamethylene diisocyanate and trimethylhexane diisocyanate; and alicyclic diisocyanates such as isophorone diisocyanate, methylcyclohexane-2,4(or 2,6)-diisocyanate, 4,4'-methylenebis(cyclohexyl isocyanate) and 1,3-(isocycanatomethyl)cyclohexane; adducts of one of these diisocyanates with a polyhydric alcohol such as ethylene glycol, polyether polyol (for example polyethylene glycol, polypropylene glycol or polycaprolactone polyol), trimethylolethane and trimethylolpropane, a low molecular weight polyester resin (including an oil-modified type) or acrylic copolymer having a functional group reactive with, for example, an isocyanate group or water; biuret products, copolymers of diisocyanates themselves (oligomers); copolymers obtained using as an indispensable components a vinyl monomer having an unsaturated group copolymerizable with the isocyanate group of, for example, a 2-hydroxypropyl(meth)acrylate-hexamethylene diisocyanate equimolar adduct or isocyanatoethyl methacrylate; polyisocyanates having an isocyanurate ring which are soluble in a non-polar organic solvent obtained by reacting a C₂ to C₈ alkylene, cycloalkylene or aralkylene diisocyanate with C₁₀ to C₄₀ diol in the present of an isocyanurate catalyst as disclosed in Japanese Laid-Open Patent Publication No. JP-C-86/72013.

If desired it is also possible to use an isocyanatoalkylalkoxysilane having an isocyanate group and a hydrolyzable silyl together, for example, -iso-cyanatopropyltriethoxysilane or KBM-9007, 907, KBE-9007 or 9207 (produced by Shin-Etsu Chemical Co., Ltd.).

The block polyisocyanate is one obtained by converting one of various polyisocyanates and isocyanate prepolymers into a block in a conventional manner.

Representative examples of a block agent used therein include phenol compounds such as phenol, cresol and xylenol; alcohol compounds such as methanol, ethanol, isopropanol,
n-butanol and benzyl alcohol; active methylene compounds such as dimethyl malonate, ethyl acetoacetate and acetylacetone; oxime compounds such as acetone oximes and ketone oximes represented by formaldoxime, acetoaldoxime and methyl ethyl ketone oxime (butanone oxime); and imidazoles such as 2-methylimidazole.

The curing agent (D) is used in an amount such that the weight ratio of (D): the vinyl polymer (A) is from 1 to 40: from 10 to 90 parts, preferably from 5 to 30: from 20 to 70 parts.

The ratio of the vinyl polymer: the compound having a carboxyl group and a hydroxyl group: the curing agent having reactivity with a hydroxyl group is 10 to 90:5 to 90:1 to 40 (weight ratio), preferably 20 to 70:10 to 60:5 to 30 (weight ratio).

The use ratio of the curing agent (D) is determined by the content of the hydroxyl groups in the other components. When the use ratio in the composition of the invention becomes too large, beyond 40% by weight, the characteristics of the vinyl polymer itself based on the cyclocarbonate crosslinking are not displayed, and therefore such a case is not preferred.

The thus obtained thermosetting resin composition of the invention can be used as it is as a clear coating, and can also be used as an enamel coating after compounding of a pigment.

Further, if necessary, known and conventional various additives such as a levelling agent, an ultra-violet absorber and a pigment dispersing agent can be compounded into the composition of the invention.

A cellulose compound, a plasticizer or a polyester resin, for example, which are known and conventional may also be added to and compounded into the composition of the invention.

As the coating method of the thermosetting resin composition of the invention, a known and conventional method such as brush coating, spray coating or roll coating can be adopted, and as for the curing method, a method ranging from so-called compulsory drying to baking curing at a temperature of 60 to 180°C can be adopted. The ratio of the 2-oxo-1,3-dioxolan-4-yl group in the vinyl copolymer as the indispensable coat-forming component of the composition of the invention to the carboxyl group or acid anhydride group in the specified compound can optimally be determined in accordance with, for example, the kind of the 2-oxo-1,3-dioxolan-4-yl group decomposition catalyst.

The thermosetting resin composition of the invention has excellent acid resistance, weather resistance and coat appearance such as smoothness.

The thermosetting resin composition of the invention can be utilized as an automobile top coat or with various metal materials. In fields where the properties required for aspects such as acid resistance, weather resistance and coat appearance have not yet been met, for example in the field of acrylic resin/melamine resin coating system, remarkable effects can be expected.

The present invention is now further described in the following Referential Examples, Examples and Comparative Examples. All parts and percentages are based on weight unless otherwise defined.

### REFERENTIAL EXAMPLE 1

(Preparation Example of a vinyl copolymer containing a 2-oxo-1,3-dioxolan-4-yl group).

500 parts of xylene and 300 parts of butanol were charged into a four-necked flask equipped with a thermometer, a condenser, an agitator and a nitrogen gas introducing tube, and the mixture was heated to 120°C. A mixture consisting of 300 parts of 2-methyl-2,3-carbonatepropyl methacrylate, 200 parts of methyl methacrylate, 200 parts of styrene and 300 parts of n-butyl methacrylate, and a mixture consisting of 200 parts of xylene, 10 parts of azobisisobutyronitrile (AIBN) and 20 parts of tert-butyl peroxy-2-ethylhexanoate were added dropwise thereto at the temperature over a period of 5 times. After completion of the dropwise addition, the resulting mixture was maintained at the temperature for 7 times to continue the reaction, whereby a solution of the desired resin having a number average molecular weight of 11,000 was obtained. The solution had a non-volatile matter content of 50.4% and a Gardner viscosity at 25°C (hereinafter abbreviated as viscosity) of M-N. Hereinafter this resin solution is referred to as resin (A-1-1).

### REFERENTIAL EXAMPLE 2

### (Same as above)

A solution of the desired resin having a non-volatile matter content of 50.6% and a viscosity of X was obtained in the same manner as in Referential Example 1 except that a mixture consisting of 150 parts of 2,3-carbonatebutyl acrylate, 150 parts of styrene, 450 parts of isobutyl methacrylate, 150 parts of 2-ethylhexyl methacrylate, 50 parts of 2,3-carbonatepropyl acrylate and 50 parts of 2-hydroxyethyl methacrylate was used as a monomer mixture. Hereinafter, this is referred to as resin (A-1-2).

### REFERENTIAL EXAMPLE 3

### (Same as above).

A solution of the desired resin having a non-volatile matter content of 50.3%, a viscosity of Q and a number average molecular weight of 10,000 was obtained in the same manner as in Referential Example 1 except that a mixture consisting of 300 parts of 2,3-carbonatebutyl allyl ether, 500 parts of vinyl acetate and 200 parts of "Veova" (Registered Trade Mark - a vinyl ester of a branched aliphatic monocarboxylic acid whose alkyl group has 9 carbon atoms, produced by Scher Chemicals, Inc., the Netherlands) was used as a monomer mixture. Hereinafter, this is referred to as resin (A-1-3).

### REFERENTIAL EXAMPLE 4

### (Preparation Example of a vinyl copolymerization resin containing carboxyl groups in the molecule)

A solution of the desired resin having a non-volatile matter content of 50.2% and a viscosity of O was obtained in the same manner as in Referential Example 1 except that a mixture consisting of 300 parts of acrylic acid, 300 parts of styrene and 400 parts of n-butyl methacrylate as a monomer mixture, and 15 parts of AIBN and 70 parts of tert-butyl peroxy-2-ethylhexanoate as initiators were used, respectively. Hereinafter, this is referred to as resin (C-2-1).

### REFERENTIAL EXAMPLE 5

### (Preparation Example of a polyester resin containing carboxyl groups in the molecule)

500 parts by weight of "Placcel 308" (a polyol produced by polymerization of caprolactone produced by DAICEL CHEMICAL INDUSTRIES, LTD.) and 87 parts of phthalic anhydride were charged into 100 parts of xylene and 50 parts of butyl acetate, and reaction was carried out at 120°c for 2 hours to obtain a solution of the desired resin having a non-volatile matter content of 80% and a viscosity of Q. Hereinafter, this is referred to as resin (C-2-2).

### EXAMPLES 1 TO 8

Thermosetting resin compositions of the invention, namely one-can baking clear coatings, were obtained using the 2-oxo-1,3-dioxolan-4-yl group containing resin solutions obtained in Referential Examples 1 to 3, and the carboxyl group containing vinyl copolymerization resin and the carboxyl group containing polyester resin obtained in Referential Examples 4 and 5, glyceroltris (trimellitate) as a carboxyl group containing and/or acid anhydride group containing compound, a 2-oxo-1,3-dioxolan-4-yl group decomposition catalyst, and, if necessary, an epoxy group ring opening catalyst according to the compounding composition ratios shown in Table 1.

### REFERENTIAL EXAMPLES 1 TO 3

A control coating composition (Comparative Example 1 product) consisting solely of the 2-oxo-1,3-dioxolan-4-yl group containing resin solution obtained in Referential Example 1, and a control coating composition (Comparative Example 2 product) consisting solely of the 2-oxo-1,3-dioxolan-4-yl group containing resin solution obtained in Referential Example 1 and the carboxyl group containing vinyl copolymerization resin obtained in Referential Example 4 were prepared.

As Comparative Example 3 there was prepared a control vinyl copolymerization resin/melamine resin coating wherein "Acrydic 52-748 RTM" (an acrylic resin produced by DAINIPPON INK AND CHEMICALS, INCORPORATED) and "Super Beckamine L-117-60" (a melamine resin produced by the above company) as usual commercial products were compounded in a compounding composition ratio of 70/30 (solid matter weight ratio).

Each thermosetting resin composition was separately spray applied onto a zinc phosphate treated steel plate and then backed in accordance with the conditions indicated in Table 1 to obtain a cured coat, which was then evaluated for the various coat performances of the items indicated in Table 1. The results are shown in Table 1.

The ring opening catalysts in Table 1 are:
- Compound 1-1:: Trimethylbenzylammonium hydroxide
- Compound 1-2:: 2-Hydroxypyridine
- Compound 1-3:: Triethylammonium chloride
- Compound 2-1:: Triphenylphosphine
- Compound 2-2:: 2-Methylimidazole

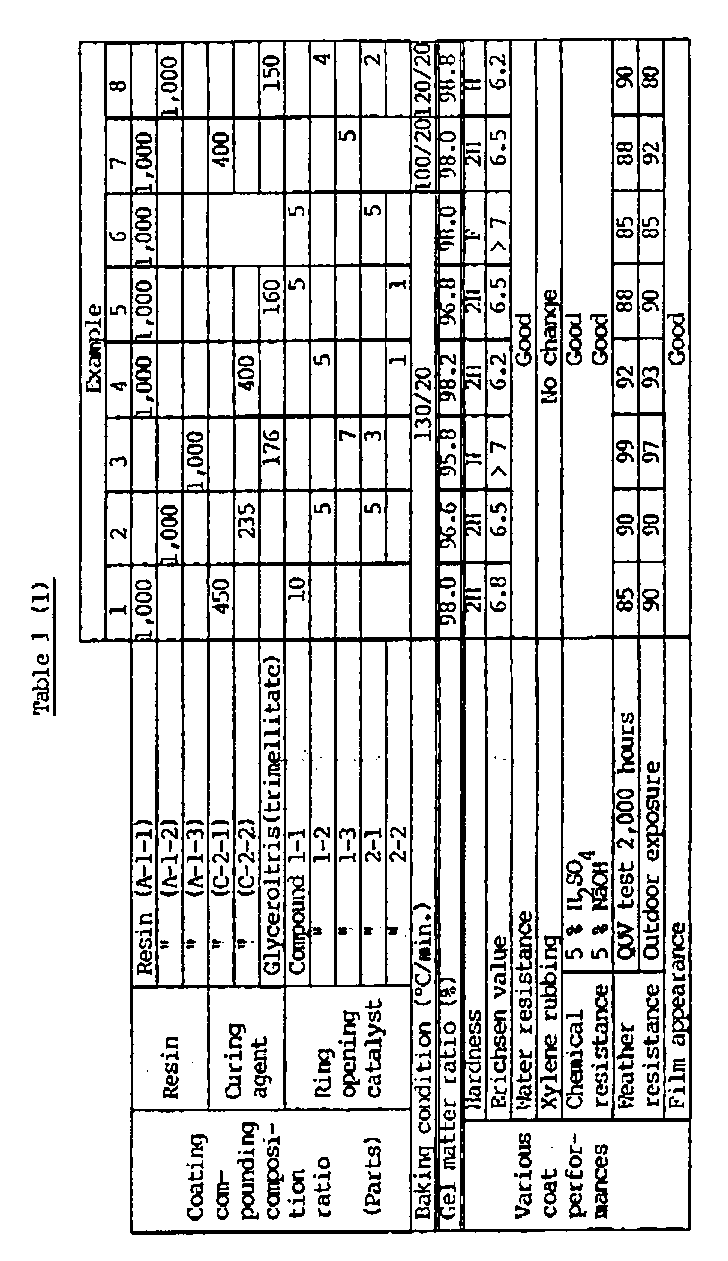

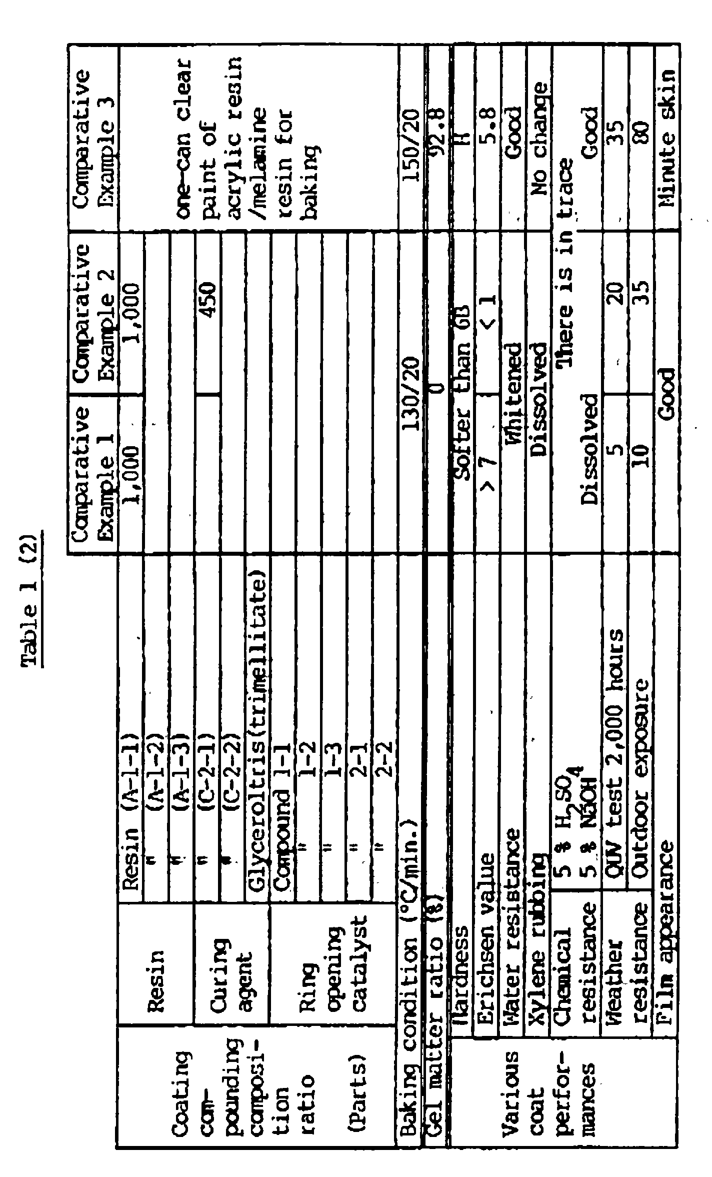

### REFERENTIAL EXAMPLE 6

### (Preparation Example of a vinyl copolymerization resin having a 2-oxo-1,3-dioxolan-4-yl group and a carboxyl group)

200 parts of a mixture consisting of 200 parts of 2,3-carbonatepropyl methacrylate, 220 parts of methyl methacrylate, 200 parts of styrene, 250 parts of n-butyl methacrylate and 130 parts of methacrylic acid, 500 parts of toluene, 200 parts of n-butanol, 12 parts of tertbutyl peroxy octoate (TBPO), and 5 parts of azobisisobutyronitrile (AIBN) were charged into a four-necked flask equipped with a thermometer, a condenser, an agitator and a nitrogen gas introducing tube. The mixture was maintained at 90°C for 30 minutes and then heated up to 115°C over a period of 30 minutes, and a mixture consisting of 800 parts of the remaining monomer mixture, 300 parts of isobutyl acetate, 12 parts of TBPO and 5 parts of AIBN was added thereto at that temperature over a period of 4 hours. After completion of the dropwise addition, the mixture was maintained at that temperature for 10 hours to continue the reaction, whereby a solution of the desired resin having a non-volatile matter content of 50.9%, a viscosity of Y-Z and a number average molecular weight of 12,000 was obtained. Hereinafter, this is referred to as resin (A-2-1).

### REFERENTIAL EXAMPLE 7

### (Same as above)

A solution of the desired resin having a non-volatile matter content of 50.6%, a viscosity of Z₁ and a number of average molecular weight of 14,000 was obtained in the same manner as in Referential Example 6 except that a mixture consisting of 150 parts of 2,3-carbonatepropyl monomaleate, 250 parts of styrene, 200 parts of n-butyl methacrylate, 150 parts of lauryl methacrylate, 130 parts of methyl methacrylate and 20 parts methacrylic acid was used as a monomer mixture. Hereinafter, this is referred to as resin (A-2-2).

### REFERENTIAL EXAMPLE 8

### (Same as above)

A solution of the desired resin having a non-volatile matter content of 50.3%, a viscosity of S-T and a number average molecular weight of 10,000 was obtained in the same manner as in Referential Example 6 except that a mixture consisting of 300 parts of 2,3-carbonatebutyl allyl ether, 400 parts of vinyl acetate, 100 parts of "Veova 9" (Registered Trade Mark) and 200 parts of adipic acid monovinyl ester was used as a monomer mixture. Hereinafter, this is referred to as resin (A-2-3).

### COMPARATIVE EXAMPLES 4 TO 9 AND EXAMPLES 9 AND 10

Coating resin compositions, namely one-can backing clear coatings, were obtained using the respective resin solutions obtained in Referential Examples 6 to 8, 2-oxo-1,3-dioxolan-4-yl group decomposing catalysts, which in the Comparative Examples are not quaternary ammonium salts, and if necessary epoxy group ring opening catalysts according to the compounding composition ratio indicated in Table 2.

### COMPARATIVE EXAMPLE 10

A control resin composition was prepared wherein only the resin obtained in Referential Example 6 was used, the curing catalyst being omitted.

The respective coatings obtained in the Examples and Referential Examples were separately applied onto "Bondelite No. 144" treated steel plates (0.6 mm x 70 mm x 150 mm) to a film thickness of about 40 µm.

Then, the applied coatings were baked in the predetermined baking conditions to obtain cured coats.

The respective coatings and the respective cured coats obtained using these respective coatings were evaluated for various performances.

The results are shown in Table 2.

Evaluations of the various performances of the coatings and the various performances of the cured coats were carried out under the following conditions.

### Stability of the coating composition

After preservation at 50°c for 7 days, the degree of the viscosity change of the coating was observed.

### Clarity of the film

The transparency of the film after curing under the baking condition indicated in Table 2 was judged by visual observation.

### Gel matter ratio

The coat after being cured under the baking condition indicated in Table 2 (cured coat) was immersed in acetone at room temperature over a period of 24 hours, and then the insoluble matter was measured.

### Hardness

This was expressed by the hardness immediately before the coat was damaged using Mitsubishi pencils "Uni".

### Erichsen value

This was measured using an Erichsen tester and expressing in "mm".

### Water resistance

This was judged by visually observing the degree of the state change of the coat after immersion in warm water of 50°C for 24 hours.

### Xylene rubbing

A felt loaded with 1 kg was impregnated with xylene, and, after 10 times reciprocating rubbing, the state change of the coat was judged by visual observation.

### Chemical resistance

The coat was immersed separately in 5% H₂SO₄ and 5% NaOH aqueous solutions respectively at 40°C for 24 hours, and then the state changes of the coats were judged by visual observation.

### Weather resistance

Both QUV test and outdoor exposure were carried out:

### QUV test

Gloss retention ratio after a 2,000 hours accelerating weathering test using a weatherometer produced by Q-Panel Co., U.S.A. was expressed by "%".

### Outdoor exposure

Gloss retention ratio after two year outdoor exposure with an angle as the inclination of the exposure stand of 5° at the suburbs of Bangkok, Thailand was expressed by "%".

### Coat appearance

Each coating was separately spray coated onto a glass surface and baked, and then the smoothness of the skin of the cured coat was judged by visual observation.

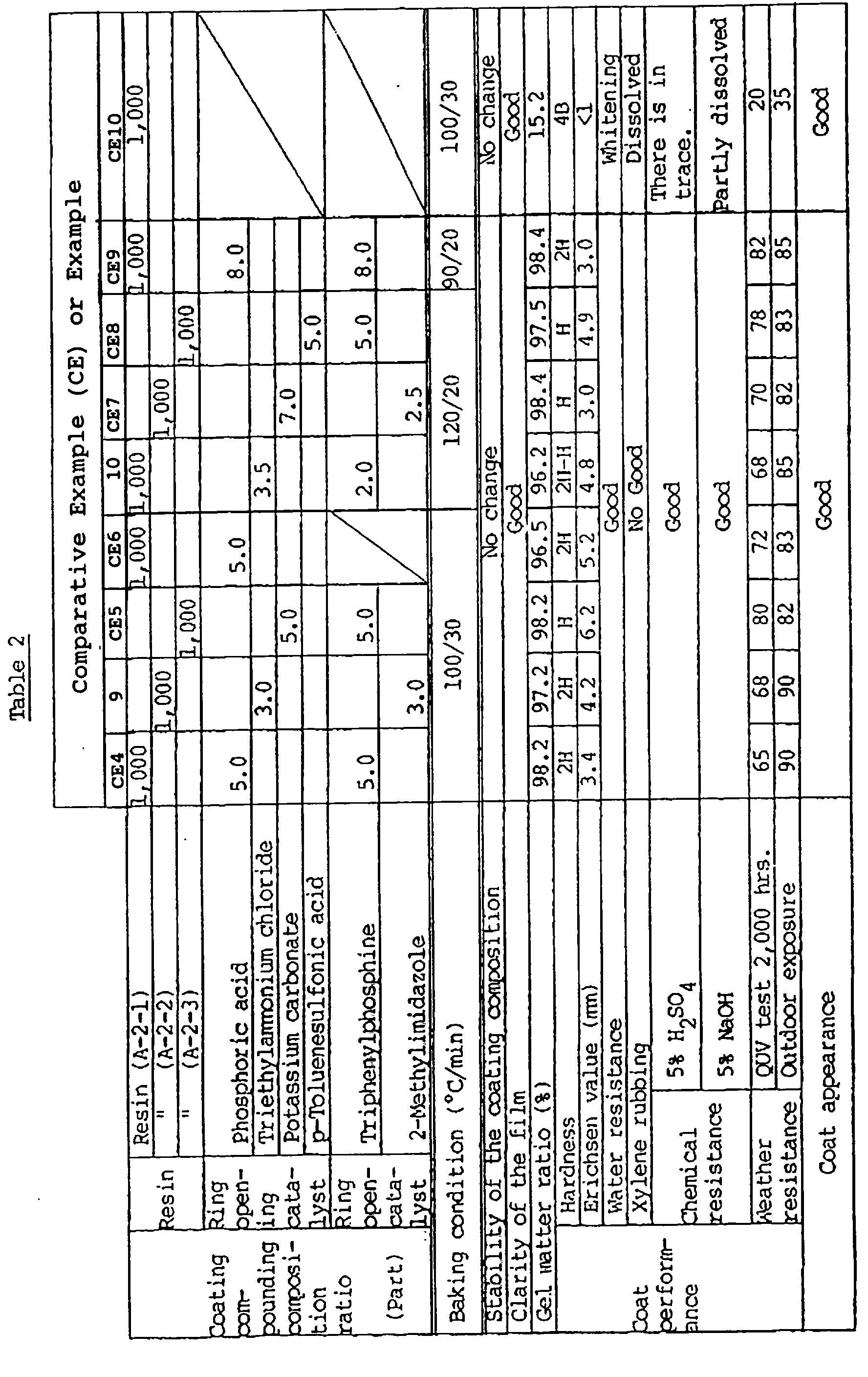

### REFERENTIAL EXAMPLE 9

### (Preparation Example of a vinyl copolymerization resin having a carboxyl group and a hydroxyl group)

A solution of the desired resin (C-1-1) having a non-volatile matter content of 50.2% and a viscosity of P was obtained in the same manner as in Referential Example 4 except that 300 parts of n-butyl methacrylate was used and 100 parts of 2-hydroxyethyl acrylate was additionally used.

### REFERENTIAL EXAMPLE 10

### (Preparation Example of a vinyl copolymerization resin having a 2-oxo-1,3-dioxolan-4-yl group and a hydroxyl group)

A solution of the desired resin having a non-volatile matter content of 50.8%, a viscosity of R and a number average molecular weight of 8,000 was obtained in the same manner as in Referential Example 1 except that a mixture consisting of 300 parts of 3,4-carbonatebutyl allyl ether, 500 parts of vinyl acetate, 100 parts of "Veova 9" and 100 parts of allyl alcohol was used as a monomer mixture. Hereinafter, referred to as resin (A-1-4).

### EXAMPLES 11 AND 12 AND COMPARATIVE EXAMPLES 11 AND 12

Thermosetting resin compositions, namely one-can baking clear coatings, were obtained in the same manner as in Examples 1 to 8 except that the compound composition was changed into a compounding composition shown in Table 3.

The resulting resin compositions were separately spray applied onto zinc phosphate-treated steel plates, and then baked in accordance with the conditions indicated in Table 3 to obtain cured coats, which were then evaluated for the various coat performances of the items indicated in Table 3. The results are shown in Table 3.

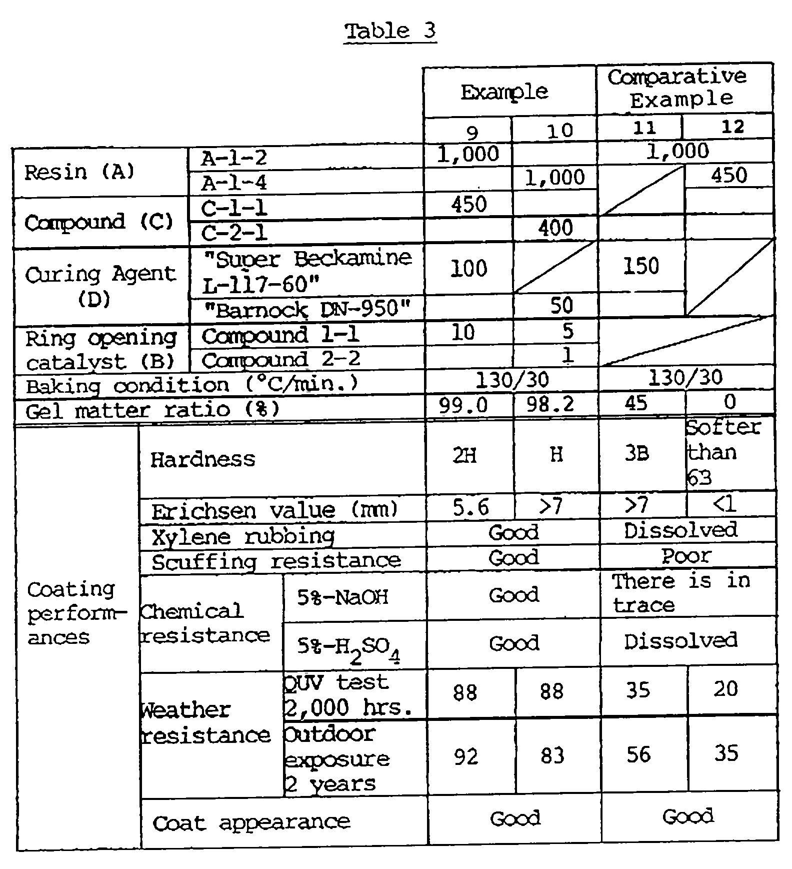

The coating resin composition of the invention has excellent stability as a one-can baking coating, and is also excellent in acid resistance and weather resistance, compared to the conventional acrylic resin/melamine resin baking coatings.

The thermosetting resin composition of the invention has excellent storage stability as a one-can coating and is thus good in workability. It moreover has excellent acid resistance, weather resistance and coat appearance, particularly smoothness.

## Claims

1. A thermosetting resin composition which comprises 100 parts by weight of a vinyl polymer (A) having at least one 2-oxo-1,3-dioxolan-4-yl group and 0.01 to 5 parts by weight of a quaternary ammonium salt or 2-hydroxypyridine as a curing catalyst (B).

2. A composition according to claim 1 wherein the vinyl polymer (A) also has a carboxyl group.

3. A composition according to claim 1 or 2 which also comprises a compound (C) having at least two carboxyl groups and/or an acid anhydride group.

4. A composition according to claim 1, 2 or 3 which also comprises a curing agent (D) having reactivity with a hydroxyl group, the weight ratio of curing agent (D): the vinyl polymer (A) being from 1 to 40 parts : from 10 to 90 parts.

5. A composition according to any one of claims 1 to 4 wherein the 2-oxo-1,3-dioxolan-4-yl group is of formula 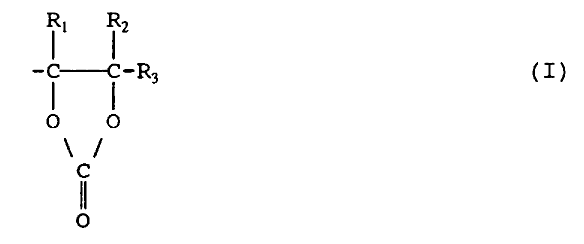 wherein R₁, R₂ and R₃, which may be identical or different, each represents a hydrogen atom or an alkyl group having 1 to 4 carbon atoms.

6. A composition according to any one of the preceding claims wherein the vinyl polymer (A) also has a hydroxyl group.

7. A composition according to any one of claims 3 to 6 wherein the compound (C) has at least two carboxyl groups and a hydroxyl group.

8. A composition according to any one of claims 3 to 6 wherein the compound (C) is at least one of a vinyl polymer, a polyester resin and a low molecular weight compound each having at least two carboxyl groups and/or an acid anhydride group.

9. A composition according to any one of the preceding claims wherein the vinyl polymer (A) has at least one 2-oxo-1,3-dioxolan-4-yl group and at least one carboxyl group and a number average molecular weight of 800 to 50,000 and is obtainable by copolymerizing 1 to 70 parts by weight of a compound (a-1) having an α,β-ethylenic unsaturated double bond and at least one 2-oxo-1,3-dioxolan-4-yl group, 1 to 70 parts by weight of a vinyl monomer (a-2) having a carboxyl group, up to 5 parts by weight of a vinyl monomer (a-3) having a tertiary amino group, and up to 98 parts by weight of another copolymerizable vinyl monomer (a-4), the total amount of monomers being 100 parts by weight.

10. A composition according to any one of the preceding claims wherein the curing catalyst (B) is a ring opening catalyst for the 2-oxo-1,3-dioxolan-4-yl group.

11. A composition according to any one of claims 4 to 10 wherein the curing agent (D) having reactivity with a hydroxyl group is at least one compound selected from an amino resin, an isocyanate prepolymer, a block polyisocyanate and a polycarboxylic anhydride.

12. A process for preparing a coated article which comprises applying a coating of a composition as claimed in any one of the preceding claims to a surface of the article and curing the coating by heating.

## Patentansprüche

1. Heißhärtende Harzmasse, umfassend 100 Gew.-Teile eines Vinylpolymers (A) mit mindestens einer 2-Oxo-1,3-dioxolan-4-yl-Gruppe und 0,01 bis 5 Gew.-Teile eines quaternären Ammoniumsalzes oder 2-Hydroxypyridin als Härtungskatalysator (B).

2. Masse nach Anspruch 1, wobei das Vinylpolymer (A) auch eine Carboxylgruppe enthält.

3. Masse nach Anspruch 1 oder 2, die zusätzlich eine Verbindung (C) enthält, mit mindestens zwei Carboxylgruppen und/oder einer Säureanhydridgruppe.

4. Masse nach Anspruch 1, 2 oder 3, die zusätzlich ein Härtungsmittel (D) enthält, mit einer Reaktionsfähigkeit mit einer Hydroxylgruppe, wobei das Gewichtsverhältnis von Härtungsmittel (D) zu dem Vinylpolymer (A) 1 bis 40 Teile zu 10 bis 90 Teilen beträgt.

5. Masse nach einem der Ansprüche 1 bis 4, wobei die 2-Oxo-1,3-dioxolan-4-yl-Gruppe die Formel: 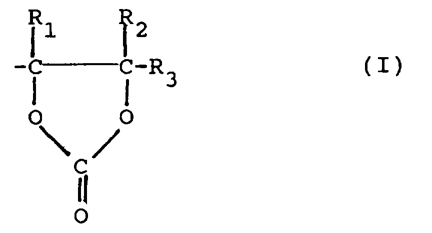 besitzt, wobei R₁, R₂ und R₃, die gleich oder verschieden sein können, jeweils ein Wasserstoffatom oder eine Alkylgruppe mit 1 bis 4 Kohlenstoffatomen bedeuten.

6. Masse nach einem der vorangehenden Ansprüche, wobei das Vinylpolymer (A) auch eine Hydroxylgruppe enthält.

7. Masse nach einem der Ansprüche 3 bis 6, wobei die Verbindung (C) mindestens zwei Carboxylgruppen und eine Hydroxylgruppe enthält.

8. Masse nach einem der Ansprüche 3 bis 6, wobei die Verbindung (C) mindestens ein Vinylpolymer, ein Polyesterharz und/oder eine niedermolekulare Verbindung mit jeweils mindestens zwei Carboxylgruppen und/oder eine Säureanhydridgruppe ist.

9. Masse nach einem der vorangehenden Ansprüche, wobei das Vinylpolymer (A) mindestens eine 2-Oxo-1,3-dioxolan-4-yl-Gruppe und mindestens eine Carboxylgruppe enthält und ein zahlenmäßiges mittleres Molekulargewicht von 800 bis 50000 aufweist und erhältlich ist durch Copolymerisieren von 1 bis 70 Gew.-Teilen einer Verbindung (a-1) mit einer α,β-ethylenisch ungesättigten Doppelbindung und mindestens einer 2-Oxo-1,3-dioxolan-4-yl-Gruppe, 1 bis 70 Gew.-Teilen eines Vinylmonomers (a-2) mit einer carboxylgruppe, bis zu 5 Gew.-Teilen eines Vinylmonomers (a-3) mit einer tertiären Aminogruppe, und bis zu 98 Gew.-Teilen eines anderen copolymerisierbaren Vinylmonomers (a-4), wobei die Gesamtmenge der Monomere 100 Gew.-Teile ausmacht.

10. Masse nach einem der vorangehenden Ansprüche, wobei der Härtungskatalysator (B) ein Ringöffnungskatalysator für die 2-Oxo-1,3-dioxolan-4-yl-Gruppe ist.

11. Masse nach einem der Ansprüche 4 bis 10, wobei das Härtungsmittel (D) mit einer Reaktionsfähigkeit mit einer Hydroxylgruppe mindestens eine Verbindung ist, ausgewählt aus einem Aminharz, einem Isocyanatprepolymer, einem Blockpolyisocyanat und einem Polycarbonsäureanhydrid.

12. Verfahren zur Herstellung eines überzogenen Gegenstandes, umfassend das Aufbringen eines Überzugs aus einer Masse nach einem der vorangehenden Ansprüche auf eine Oberfläche des Gegenstandes und Härten des Überzugs durch Erhitzen.

## Revendications

1. Composition de résine thermodurcissable comportant 100 parties en poids d'un polymère vinylique (A) portant au moins un groupe 2-oxo-1,3-dioxolan-4-yle et 0,01 à 5 parties en poids d'un sel d'ammonium quaternaire ou de 2-hydroxypyridine à titre de catalyseur de durcissement (B).

2. Composition selon la revendication 1, dans laquelle le polymère vinylique (A) porte aussi un groupe carboxyle.

3. Composition selon la revendication 1 ou 2, qui comporte également un composé (C) portant au moins deux groupes carboxyle et/ou un groupe anhydride d'acide.

4. Composition selon la revendication 1, 2 ou 3, qui comporte également un agent de durcissement (D) réactif vis-à-vis d'un groupe hydroxyle, le rapport pondéral de l'agent de durcissement (D) au polymère vinylique (A) valant (1 à 40 parties) / (10 à 90 parties).

5. Composition selon l'une quelconque des revendications 1 à 4, dans laquelle le groupe 2-oxo-1,3-dioxolan-4-yle a pour formule : 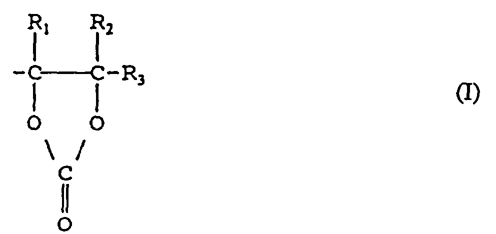 dans laquelle R₁, R₂ et R₃, qui peuvent être identiques ou différents, représentent chacun un atome d'hydrogène ou un groupe alkyle comportant 1 à 4 atomes de carbone.

6. Composition selon l'une quelconque des revendications précédentes, dans laquelle le polymère vinylique (A) porte également un groupe hydroxyle.

7. Composition selon l'une quelconque des revendications 3 à 6, dans laquelle le composé (C) porte au moins deux groupes carboxyle et un groupe hydroxyle.

8. Composition selon l'une des revendications 3 à 6, dans laquelle le composé (C) comprend au moins l'un des composés suivants : un polymère vinylique, une résine polyester et un composé à bas poids moléculaire, chacun portant au moins deux groupes carboxyle et/ou un groupe anhydride d'acide.

9. Composition selon l'une quelconque des revendications précédentes, dans laquelle le polymère vinylique (A) porte au moins un groupe 2-oxo-1,3-dioxolan-4-yle et au moins un groupe carboxyle et a une masse moléculaire moyenne en nombre valant de 800 à 50.000 et est susceptible d'être obtenu par copolymérisation de 1 à 70 parties en poids d'un composé (a-1) ayant une double liaison insaturée α,β-éthylénique et au moins un groupe 2-oxo-1,3-dioxolan-4-yle, 1 à 70 parties en poids d'un monomère vinylique (a-2) portant un groupe carboxyle, jusqu'à 5 parties en poids d'un monomère vinylique (a-3) portant un groupe amino tertiaire, et jusqu'à 98 parties en poids d'un autre monomère vinylique copolymérisable (a-4), la quantité totale de monomères étant de 100 parties en poids.

10. Composition selon l'une quelconque des revendications précédentes, dans laquelle le catalyseur de durcissement (B) est un catalyseur d'ouverture de cycle pour le groupe 2-oxo-1,3-dioxolan-4-yle.

11. Composition selon l'une quelconque des revendications 4 à 10, dans laquelle l'agent de durcissement (D) réactif vis-à-vis d'un groupe hydroxyle est constitué d'au moins un composé choisi parmi une résine amino, un prépolymère isocyanate, un polyisocyanate séquencé et un anhydride polycarboxylique.

12. Procédé de préparation d'un article revêtu qui comporte l'application d'un revêtement constitué d'une composition telle que revendiquée dans l'une quelconque des revendications précédentes sur une surface de l'article et le durcissement du revêtement par chauffage.
